# EUROPEAN PATENT SPECIFICATION

(11) **EP 3 804 830 B1**
(45) Date of publication and mention of the grant of the patent: **06.12.2023**
(21) Application number: 20200084.0
(22) Date of filing: 05.10.2020
(51) Int. Cl.: B01D 24/16, B01D 24/36, B01D 24/44, B01D 24/46

(54) **REVERSIBLE WASHING, FLOATING BED TYPE REVERSE SEWAGE TREATMENT SYSTEM AND TREATMENT METHOD THEREOF**
UMKEHRBARES WASCH-, SCHWEBEBETT-UMKEHRABWASSERBEHANDLUNGSSYSTEM UND BEHANDLUNGSVERFAHREN DAFÜR
SYSTÈME DE TRAITEMENT INVERSE DES EAUX USÉES DE TYPE À LIT FLOTTANT ET À LAVAGE RÉVERSIBLE ET PROCÉDÉ DE TRAITEMENT CORRESPONDANT

(30) Priority: 07.10.2019 TW 108136287
(43) Date of publication of application: 14.04.2021
(73) Proprietor: Hu, Ming-Chun, New Taipei City 231 (TW); Hu, Chao-Shen, New Taipei City 231 (TW)
(72) Inventor: Hu, Ming-Chun, 231 New Taipei City (TW)
(74) Representative: AWA Sweden AB

(56) References cited:
- DE-A1- 3 540 508
- GB-A- 2 285 975
- US-A- 4 033 874
- US-B1- 6 365 044

## Description

### FIELD OF THE INVENTION

The present invention relates to a sewage treatment system and treatment method thereof, and more particularly to a reversible washing, floating bed type reverse sewage treatment system and a treatment method thereof, which make the sewage flow direction opposite to the deposition direction of impurity particles.

### BACKGROUND OF THE INVENTION

At present, most of the sewage treatment equipments adopt filter cloth (filter mesh, filter cotton) to filter, or centrifugal filter to filter, or use filter sand to filter by gravity sedimentation, or pressure squeeze method to filter. The above filter cloth (filter cloth, filter cotton) filtration method is to allow the sewage flow down through the filter cloth, so that the solid impurities and harmful substances in the sewage accumulate on the surface of filter cloth or filter cotton to form sludge. Once the sludge accumulated on the surface is too thick, it will directly affect the filtration efficiency, and the filter cloth (filter cloth, filter cotton) must be replaced frequently or disassembled for cleaning, resulting in excessive maintenance and high cost. As for the gravity sedimentation filtration method of the filter sand, it is required the construction of a sedimentation tank, which causes the disadvantages of large area occupation and time-consuming construction, and a large amount of flocculant must be used to accelerate the sedimentation. As for the centrifugal filter and pressure squeeze filter method, it is required various power equipments, wherein the equipment costs are high, the sewage treatment capacity is limited, and the sewage treatment cost is too high. Therefore, how to overcome the problem of sewage impurity particles deposited on the filter materials and how to separate the impurity particles of sewage from filter materials by using the least energy to facilitate the cleaning of the filter materials and the removal of sludge are the subject to be actively overcome by the present invention.

DE 3540508 A1 disclosed a process and a device for removing disperse and dissolved substances from liquids. The liquid is treated in a floating bed after separation of coarse sediment in a continuously rising stream, fine sediment separated, subsequently clarified by sedimentation and finally filtered with filter material floating in it, and that the filter material is cleaned externally. However, the filter material is flowed into the removal line for external cleaning only when the ascending stream of liquids existed. That is, the process step of filtering the liquids and cleaning the filter material must be processed at the same time, otherwise, the filter material has no force to be flowed into the removal line. There is a need for a simpler and more effective way to clean the filter material.

### SUMMARY OF THE INVENTION

In view of the shortcomings of the above-mentioned prior art, the present invention discloses a reversible washing, floating bed type reverse sewage treatment system and its treatment method to achieve the long-term maintenance of filtration efficiency, reduce the frequency of filter maintenance and maintenance, save energy and reduce maintenance costs, and facilitate the treatment of sludge and simplify maintenance procedures.

The main purpose of the present invention is to provide a reversible floating bed type reverse sewage treatment system and its treatment method, which mainly through the structure of the sewage filter tank and the application of light filter sands, so that the flow direction of sewage is opposite to the direction of impurity particle deposition, thereby overcoming the problem of impurity particles deposited on the filter material, achieving long-term maintenance of filter efficiency, reducing the number of maintenance of the filter material, saving energy, reducing maintenance costs, and facilitating the treatment of sludge and simplify maintenance procedures.

To achieve the above and other purposes, the present invention provides a reversible washing, floating bed type reverse sewage treatment system used for filtering sewage into clean water. The reversible washing, floating bed type reverse sewage treatment system includes a sewage filter tank, a plurality of light filter sands, a filter sand cleaning tank, a reverse washing jet nozzle, and a sludge discharge device. The sewage filter tank is a closed container with a sewage filter chamber inside. A sewage inlet pipe communicated to the sewage treatment chamber is provided at a bottom of the closed container, and a clean water drainage pipe communicated to the sewage treatment chamber is provided at a top of the sewage filter tank. The light filter sands are filled in the sewage filter chamber and gathered in an upper part of the sewage filter chamber through a buoyancy of water. One end of the filter sand cleaning tank is communicated to a top end of the sewage filter chamber of the sewage filter tank through a sand inlet pipe, the other end of the filter sand cleaning tank is communicated back to the sewage filter chamber of the sewage filter tank through a sand outlet pipe, for cyclically cleaning the light filter sands. The reverse washing jet nozzle extends into the sewage filter chamber of the sewage filter tank and is located above the clean water drainage pipe, and is used for inputting clean water to wash the light filter sands. The sludge discharge device is arranged at a bottom of the sewage filter tank and communicated to the sewage filter chamber, and is used for discharging deposited sludge at the bottom of the sewage filter chamber.

The light filter sand is a filter particle having a specific gravity smaller than that of water.

In an embodiment of the present invention, the sewage inlet pipe is provided with a first valve, the clean water drainage pipe is provided with a second valve, the sand inlet pipe is provided with a third valve, the sand outlet pipe is provided with a fourth valve, and the reverse washing jet nozzle is provided with a fifth valve.

In an embodiment of the present invention, a pipe wall of the clean water drainage pipe is provided with a plurality of meshes or screens to prevent the light filter sands from entering the clean water drainage pipe and therefore only allow clean water to flow into the clean water drainage pipe.

In an embodiment of the present invention, the reverse washing jet nozzle is provided with a plurality of meshes or screens to prevent the light filter sands from entering the sewage filter chamber and therefore only allow clean water to flow into the sewage filter chamber.

In an embodiment of the present invention, the sludge discharge device includes a sludge conveyor and a sludge discharge pipe. The sludge conveyor is arranged at the bottom of the sewage filter tank, and the sludge discharge pipe is communicated to the bottom of the sewage filter chamber through the sludge conveyor.

In an embodiment of the present invention, one side of the sewage filter tank is provided with a water level indicator.

In an embodiment of the present invention, the water level indicator is a water level perspective window opened at a side wall of the sewage filter tank or a transparent water level pipe installed on a side of the sewage filter tank, and the transparent water level pipe is communicated to the sewage filter chamber.

In order to achieve the above and other purposes, the present invention provides a treatment method of the aforementioned reversible washing, floating bed type reverse sewage treatment system. The treatment method includes a sewage filtration procedure, and the sewage filtration procedure includes steps of: (a) open the clean water drainage pipe of the sewage filter tank, and close the sand inlet pipe, the sand outlet pipe of the filter sand cleaning tank, the reverse washing jet nozzle and the sludge discharge device; (b) open the sewage inlet pipe of the sewage filter tank to allow the external sewage to enter into the sewage filter chamber; (c) configure the sewage to flow upward to the clean water drainage pipe; (d) configure the light filter sands to be gathered above the sewage filter chamber by a buoyancy of the sewage and to filter impurities and harmful substances in the sewage flowing upward to filter the sewage into a purified water, and then discharge the purified water; and (e) configure solid impurities adsorbed by the light filter sands to settle to the bottom of the sewage filter chamber, so that sludge is formed and deposited and then is discharged through the sludge discharge device.

In an embodiment of the present invention, the treatment method includes a filter sand reverse washing procedure, and the filter sand reverse washing procedure includes steps of: (f) close the sewage inlet pipe and the clean water drainage pipe of the sewage filter tank, the clean water drainage pipe and the sand outlet pipe, and open the sand inlet pipe of the filter sand cleaning tank; (g) open the reverse washing jet nozzle to allow an external clean water to enter into the sewage filter chamber; (h) configure the clean water to flush the light filter sands, so that the light filter sands float upward and enter into the filter sand cleaning tank through the sand inlet pipe; (i) in a state in which the sand outlet pipe is closed, clean the light filter sands in the filter sand cleaning tank and then store the light filter sands in the filter sand cleaning tank; and (j) close the sewage inlet pipe, the clean water drainage pipe, the sand inlet pipe and the reverse washing jet nozzle, and open the sand outlet pipe, and activate the sludge discharge device to discharge sludge deposited on the bottom of the sewage filter chamber, and form a vacuum negative pressure state in the sewage filter chamber, so that the light filter sands in the filter sand cleaning tank flow back to the sewage filter chamber through the sand outlet pipe.

The reversible washing, floating bed type reverse sewage treatment system and its treatment methods provided by the present invention can achieve the following effects.
(I) Through the structure of light filter sands and reverse sewage treatment and the design of sewage filtering procedure, the present invention can float and gather the light filter sands to the top of the sewage filter tank to filter the sewage flowing upward due to that the light filter sand have a smaller specific gravity than water. In addition, the solid impurities in the sewage are separated from the light filter sands because of their weight greater than water energy, and most of them are deposited on the bottom of the sewage filter tank by themselves. As such, the effects of maintaining the filtration efficiency for a long time and reducing the maintenance of the filter material are achieved.
(II) Through the structure of the reverse washing jet nozzle and the filter sand cleaning tank and the design of filter sand reverse washing procedure, the present invention uses the clean water sprayed by the reverse washing jet nozzle to make the light filter sands float upward through the sand inlet pipe and enter the filter sand cleaning tank for cleaning. As such, there is no need to take out the light filter sands or pump for pumping, which can achieve the effect of energy saving and reducing maintenance costs.
(III) The present invention discharges the sludge deposited on the bottom of the sewage filter chamber through the sludge discharge device, which can achieve the effects of convenient sludge treatment and simplified maintenance procedures.

### BRIEF DESCRIPTION OF THE DRAWING

FIG. 1 is a three-dimensional schematic diagram of a reversible washing, floating bed type reverse sewage treatment system of the present invention;
FIG. 2 is a schematic diagram illustrating a sewage filtering procedure of a reversible washing, floating bed type reverse sewage treatment system according to an embodiment of the present invention; and
FIG 3 is a schematic diagram illustrating a filter sand reverse washing procedure of a reversible washing, floating bed type reverse sewage treatment system according to an embodiment of the present invention.

### DETAILED DESCRIPTION OF PREFERRED EMBODIMENTS

In order to fully understand the purposes, features and effects of the present invention, the following specific embodiments are used in conjunction with the accompanying drawings to give a detailed description of the present invention. The description is as follows.

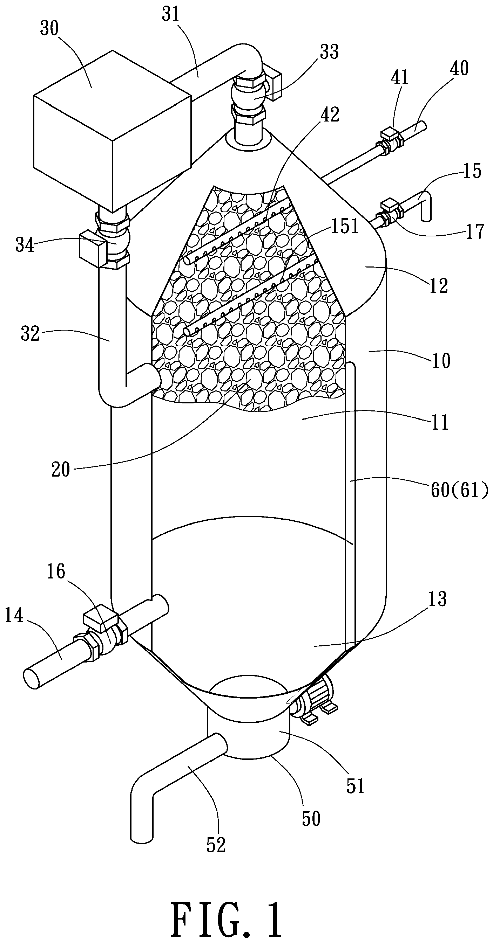

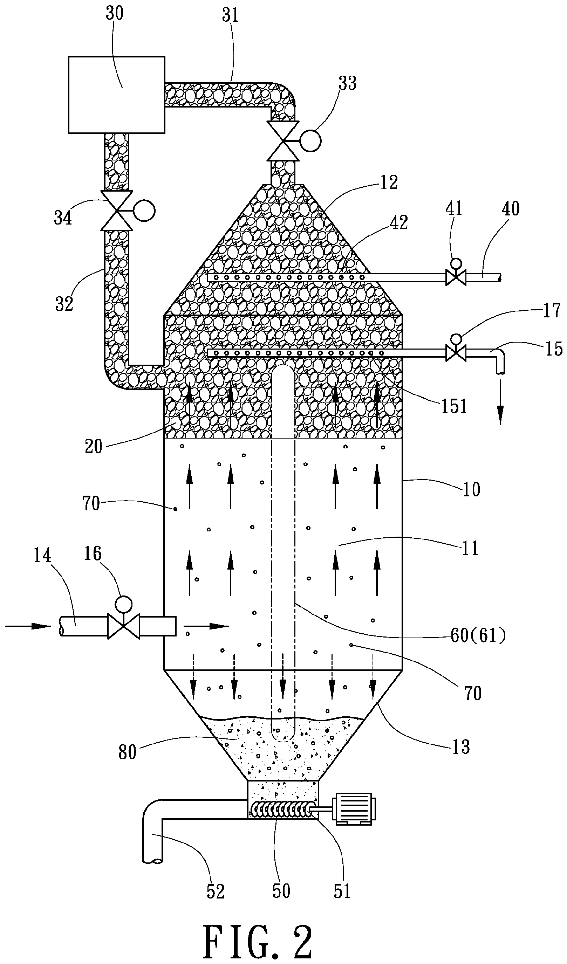

FIG. 1 is a three-dimensional schematic diagram of a reversible washing, floating bed type reverse sewage treatment system of the present invention. FIG. 2 is a schematic diagram illustrating a sewage filtering procedure of a reversible washing, floating bed type reverse sewage treatment system according to an embodiment of the present invention. Referring to FIGS. 1 and 2, the reversible washing, floating bed type reverse sewage treatment system is used to filter the input sewage into purified water and then output the purified water. The reversible washing, floating bed type reverse sewage treatment system in a preferred embodiment includes a sewage filter tank 10, a plurality of light filter sands 20, a filter sand cleaning tank 30, a reverse washing jet nozzle 40, and a sludge discharge device 50. The sewage filter tank 10 is a closed container with a sewage filter chamber 11 inside. The sewage filter tank 10 can be composed of a vertical barrel tank. The top end of the closed container is provided with an upper cone section 12, the bottom end of the closed container is provided with a lower cone section 13, the bottom of the closed container is provided with a sewage inlet pipe 14 communicated to the sewage filter chamber 11, and the top of the closed container is provided with a clean water drainage pipe 15 communicated to the sewage treatment chamber 11. The light filter sand 20 are light filter particles with a specific gravity smaller than that of water (<1) and are filled in the sewage filter chamber 11. The light filter sands 20 are gathered in the upper part of the sewage filter chamber 11 and the upper cone section 12 through the buoyancy of water to filter impurities and harmful substances in the sewage. The filter sand cleaning tank 30 is used for storing and cleaning the light filter sands 20. One end of the filter sand cleaning tank 30 is communicated to the top of the upper cone section 12 of the sewage filter chamber 11 of the sewage filter tank 10 through a sand inlet pipe 31, the other end of the filter sand cleaning tank 30 is communicated back to the sewage filter chamber 11 of the sewage filter tank 10 through a sand outlet pipe 32, and therefore the filter sand cleaning tank 30 can cyclically clean the light filter sands 20 and store the light filter sands 20. One end of the reverse washing jet nozzle 40 extends into the sewage filter chamber 11 of the sewage filter tank 10 and is located above the clean water drainage pipe 15, the other end of the reverse washing jet nozzle 40 is connected to the clean water source, and therefore the reverse washing jet nozzle 40 is used for inputting the clear water into the sewage filter chamber 11 to wash the light filter sands 20. The sludge discharge device 50 is arranged at the bottom of the lower cone section 13 of the sewage filter tank 10 and is communicated to the sewage filter chamber 11 to discharge the deposited sludge 80 on the bottom of the sewage filter chamber 11.

Refer to FIGS. 1 and 2 again. In order to realize the automatic control for sewage filtration and cleaning, the reversible washing, floating bed type reverse sewage treatment system in a preferred embodiment of the present invention further includes a first valve 16 provided at the sewage inlet pipe 14 of the sewage filter tank 10, a second valve 17 provided at the clean water drainage pipe 15, a third valve 33 provided at the sand inlet pipe 31 of the filter sand cleaning tank 30, a fourth valve 34 provided at the sand outlet pipe 32, and a fifth valve 41 provided at the reverse washing jet nozzle 40. The first valve 16, the second valve 17, the third valve 33, the fourth valve 34 and the fifth valve 41 are all electric valves, which can open and close the respective pipelines through an automatic controller. In addition, the pipe wall of the clean water drainage pipe 15 is provided with a barrier structure or equipment, such as a plurality of meshes 151 or screens, to prevent the light filter sands 20 from entering the pipe and therefore only allow the clean water to flow into the clean water drainage pipe 15. The reverse washing jet nozzle 40 is also provided with a barrier structure or equipment, such as a plurality of meshes 42 or screens, to prevent the light filter sands 20 from entering the pipe and therefore only allow the clean water to flow into the sewage filter chamber 11.

Refer to FIGS. 1 and 2 again. The sludge discharge device 50 in a preferred embodiment includes a sludge conveyor 51 and a sludge discharge pipe 52. The sludge conveyor 51 is provided at the bottom of the lower cone section 13 of the sewage filter tank 10, and the sludge discharge pipe 52 is communicated to the bottom of the sewage filter chamber 11 through the sludge conveyor 51. The sludge conveyor 51 can be a screw conveyor, a pumping pipe conveyor, etc, and any mechanism that can suck the sludge 80 and transport it outward can be applied to the present invention. In addition, one side of the sewage filter tank 10 can be further provided with a water level indicator 60. The water level indicator 60 can be a water level perspective window 61 opened at one side wall of the sewage filter tank 10, or a transparent water level pipe (not shown) installed on one side of the sewage filter tank 10. The transparent water level pipe is communicated to the sewage filter chamber 11 to display the water level in the sewage filter chamber 11 and the height of the light filter sands 20.

FIG. 2 is a schematic diagram illustrating a treatment method of a reversible washing, floating bed type reverse sewage treatment system according to an embodiment of the present invention. The treatment method includes a sewage filtration procedure, which includes the following steps (a) to (e).
(a) Open the second valve 17 of the clean water drainage pipe 15 of the sewage filter tank 10, and close the third valve 33 of the sand inlet pipe 31 of the filter sand cleaning tank 30 and the fourth valve 34 of the sand outlet pipe 32, and close the fifth valve 41 of the reverse washing jet nozzle 40, and close the sludge discharge device 50.
(b) Open the first valve 16 of the sewage inlet pipe 14 of the sewage filter tank 10 to allow the external sewage to enter into the sewage filter chamber 11 through the sewage inlet pipe 14.
(c) Configure the sewage in the sewage filter chamber 11 to flow upward to the clean water drainage pipe 15 (as shown by the solid line arrow in FIG. 2) by the pressure of the injected water to float the light filter sands 20 upward.
(d) Configure the light filter sands 20 to be gathered above the sewage filter chamber 11 by the buoyancy of the sewage and to filter the impurities and harmful substances in the sewage flowing upward to filter the sewage into the purified water, and then discharge the purified water outward through the clean water drainage pipe 15.
(e) Configure the solid impurities 70 adsorbed by the light filter sands 20 to settle to the bottom of the sewage filter chamber 11 (as shown by the dashed arrow in FIG. 2) since the specific gravity of the solid impurities 70 is greater than that of water, so that the sludge 80 is formed and deposited and then is discharged through the sludge discharge device 50.

In this way, the reversible washing, floating bed type reverse sewage treatment system and its treatment method of the present invention can allow the light filter sands 20 to float upward and gather at the top of the sewage filter tank 11 due to that the specific gravity of the light filter sands 20 is smaller than that of the water, so as to filter the sewage flowing upward. In addition, the solid impurities 70 in the sewage are naturally separated from the light filter sands 20 because of their specific gravity greater than that of water, and settle down on the bottom of the sewage filter tank 10, thereby achieving the effect of maintaining the filtration efficiency for a long time and reducing the maintenance of the filter material.

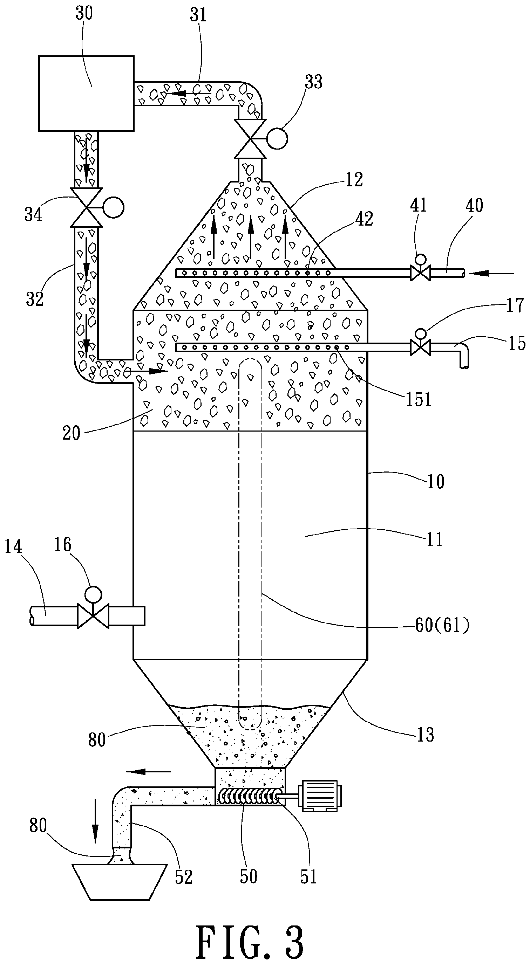

FIG. 3 is a schematic diagram illustrating a treatment method of a reversible washing, floating bed type reverse sewage treatment system according to another embodiment of the present invention. The treatment method includes a filter sand reverse washing procedure, which includes the following steps (f) to (i).
(f) Close the first valve 16 of the sewage inlet pipe 14 of the sewage filter tank 10, the second valve 17 of the clean water drainage pipe 15 and the fourth valve 34 of the sand outlet pipe 32, and open the third valve 33 of the sand inlet pipe 31 of the filter sand cleaning tank 30.
(g) Open the fifth valve 41 of the reverse washing jet nozzle 40 to allow the external clean water to enter into the sewage filter chamber 11.
(h) Configure the clean water to flush the light filter sands 20 in the sewage filter chamber 11, so that the light filter sands 20 can float upward and enter into the filter sand cleaning tank 30 through the sand inlet pipe 31 because of the specific gravity of the light filter sands 20 smaller than that of water.
(i) In the state in which the fourth valve 34 of the sand outlet pipe 32 is closed, clean the light filter sands 20 in the filter sand cleaning tank 30 and then store the light filter sands 20 in the filter sand cleaning tank 30.
(j) Close the first valve 16 of the sewage inlet pipe 14, the second valve 17 of the clean water drainage pipe 15, the third valve 33 of the sand inlet pipe 31 and the fifth valve 41 of the reverse washing jet nozzle 40, and open the fourth valve 34 of the sand outlet pipe 32, and activate the sludge discharge device 50 to discharge the sludge 80 deposited on the bottom of the sewage filter chamber 11, and form a vacuum negative pressure state in the sewage filter chamber 11 by the effect of the sludge discharge device 50 discharging the sludge 80, so that the light filter sands 20 in the filter sand cleaning tank 30 are sucked back into the sewage filter chamber 11 through the sand outlet pipe 32, and thereby cyclically performing the cleaning procedure of the light filter sands 20.

The present invention can clean the light filter sands 20 that have been used for a period of time through the structure of the reverse washing jet nozzle 40 and the filter sand cleaning tank 30 and the filter sand reverse cleaning procedure. The cleaning process does not require removing the light filter sands 20 and does not need pumps for pumping, so energy saving and maintenance cost reduction can be achieved. Meanwhile, the sludge 80 deposited on the bottom of the sewage filter chamber 11 is discharged through the sludge discharge device 50, so that the light filter sands 20 in the filter sand cleaning tank 30 can flows back into the sewage filter chamber 11 under negative pressure, which can also achieve the effects of energy saving, convenient sludge treatment and simplified maintenance procedures.

While the invention has been described in terms of what is presently considered to be the most practical and preferred embodiments, it is to be understood that the invention needs not be limited to the disclosed embodiment. On the contrary, it is intended to cover various modifications and similar arrangements included within the scope of the appended claims which are to be accorded with the broadest interpretation so as to encompass all such modifications and similar structures.

## Claims

1. A reversible washing, floating bed type reverse sewage treatment system used for filtering sewage into clean water, comprising:
a sewage filter tank (10), being a closed container with a sewage filter chamber (11) inside, wherein a sewage inlet pipe (14) communicated to the sewage treatment chamber is provided at a bottom of the closed container, and a clean water drainage pipe (15) communicated to the sewage treatment chamber is provided at a top of the sewage filter tank (10);
a plurality of light filter sands (20) with a specific gravity smaller than that of water, filled in the sewage filter chamber (11) and to be gathered in an upper part of the sewage filter chamber (11) through a buoyancy of water;
a filter sand cleaning tank (30), wherein one end of the filter sand cleaning tank (30) is communicated to a top end of the sewage filter chamber (11) of the sewage filter tank (10) through a sand inlet pipe (31), the other end of the filter sand cleaning tank (30) is communicated back to the sewage filter chamber (11) of the sewage filter tank (10) through a sand outlet pipe (32) for cyclically cleaning the light filter sands (20);
a sludge discharge device (50), arranged at a bottom of the sewage filter tank (10) and communicated to the sewage filter chamber (11), used for discharging deposited sludge (80) at the bottom of the sewage filter chamber (11) and
a reverse washing jet nozzle (40), **characterized in that**, said reverse washing jet nozzle (40) extending into the sewage filter chamber (11) of the sewage filter tank (10) and located above the clean water drainage pipe (15), used for inputting clean water to wash the light filter sands (20).

2. The reversible washing, floating bed type reverse sewage treatment system according to claim 1, wherein the light filter sand (20) is a filter particle having a specific gravity smaller than that of water.

3. The reversible washing, floating bed type reverse sewage treatment system according to claim 1, wherein the sewage inlet pipe (14) is provided with a first valve (16), the clean water drainage pipe (15) is provided with a second valve (17), the sand inlet pipe (31) is provided with a third valve (33), the sand outlet pipe (32) is provided with a fourth valve (34), and the reverse washing jet nozzle (40) is provided with a fifth valve (41).

4. The reversible washing, floating bed type reverse sewage treatment system according to claim 1, wherein a pipe wall of the clean water drainage pipe (15) is provided with a plurality of meshes (42, 151) or screens to prevent the light filter sands (20) from entering the clean water drainage pipe (15) and therefore only allow clean water to flow into the clean water drainage pipe (15).

5. The reversible washing, floating bed type reverse sewage treatment system according to claim 1, wherein the reverse washing jet nozzle (40) is provided with a plurality of meshes (42, 151) or screens to prevent the light filter sands (20) from entering the sewage filter chamber (11) and therefore only allow clean water to flow into the sewage filter chamber (11).

6. The reversible washing, floating bed type reverse sewage treatment system according to claim 1, wherein the sludge discharge device (50) comprises a sludge conveyor (51) and a sludge discharge pipe (52), the sludge conveyor (51) is arranged at the bottom of the sewage filter tank (10), and the sludge discharge pipe (52) is communicated to the bottom of the sewage filter chamber (11) through the sludge conveyor (51).

7. The reversible washing, floating bed type reverse sewage treatment system according to claim 1, wherein one side of the sewage filter tank (10) is provided with a water level indicator (60).

8. The reversible washing, floating bed type reverse sewage treatment system according to claim 7, wherein the water level indicator (60) is a water level perspective window (61) opened at a side wall of the sewage filter tank (10) or a transparent water level pipe installed on a side of the sewage filter tank (10), and the transparent water level pipe is communicated to the sewage filter chamber (11).

9. A treatment method of the reversible washing, floating bed type reverse sewage treatment system according to claim 1, the treatment method comprising a sewage filtration procedure, **characterized in that** the sewage filtration procedure comprising steps of:
(a) opening the clean water drainage pipe (15) of the sewage filter tank (10), and closing the sand inlet pipe (31), the sand outlet pipe (32) of the filter sand cleaning tank (30), the reverse washing jet nozzle (40) and the sludge discharge device (50);
(b) opening the sewage inlet pipe (14) of the sewage filter tank (10) to allow the external sewage to enter into the sewage filter chamber (11);
(c) configuring the sewage to flow upward to the clean water drainage pipe (15);
(d) configuring the light filter sands (20) to be gathered above the sewage filter chamber (11) by a buoyancy of the sewage and to filter impurities and harmful substances in the sewage flowing upward to filter the sewage into a purified water, and then discharging the purified water; and
(e) configuring solid impurities (70) adsorbed by the light filter sands (20) to settle to the bottom of the sewage filter chamber (11), so that sludge (80) is formed and deposited and then is discharged through the sludge discharge device (50).

10. The treatment method of the reversible washing, floating bed type reverse sewage treatment system according to claim 9, wherein the treatment method comprises a filter sand reverse washing procedure, and the filter sand reverse washing procedure comprises steps of:
(f) closing the sewage inlet pipe (14) and the clean water drainage pipe (15) of the sewage filter tank (10), the clean water drainage pipe (15) and the sand outlet pipe (32), and opening the sand inlet pipe (31) of the filter sand cleaning tank (30);
(g) opening the reverse washing jet nozzle (40) to allow an external clean water to enter into the sewage filter chamber (11);
(h) configuring the clean water to flush the light filter sands (20), so that the light filter sands (20) float upward and enter into the filter sand cleaning tank (30) through the sand inlet pipe (31);
(i) in a state in which the sand outlet pipe (32) is closed, cleaning the light filter sands (20) in the filter sand cleaning tank (30) and then storing the light filter sands (20) in the filter sand cleaning tank (30); and
(j) closing the sewage inlet pipe (14), the clean water drainage pipe (15), the sand inlet pipe (31) and the reverse washing jet nozzle (40), and opening the sand outlet pipe (32), and activating the sludge discharge device (50) to discharge sludge (80) deposited on the bottom of the sewage filter chamber (11), and forming a vacuum negative pressure state in the sewage filter chamber (11), so that the light filter sands (20) in the filter sand cleaning tank (30) flow back to the sewage filter chamber (11) through the sand outlet pipe (32).

## Patentansprüche

1. Umkehrbares Wasch-, Umkehrabwasserbehandlungssystem vom Typ eines Schwebebetts, das dazu verwendet wird, um Abwasser in sauberes Wasser zu filtern, wobei das System umfasst:
einen Abwasserfiltertank (10), der aus einem geschlossenen Container mit einer Abwasserfilterkammer (11) im Innern besteht, wobei ein Abwassereinlassrohr (14), das mit der Abwasserbehandlungskammer in Verbindung steht, auf einem Boden des geschlossenen Containers bereitgestellt ist, und wbei ein Abflussrohr (15) für sauberes Wasser, das mit der Abwasserbehandlungskammer in Verbindung steht, oben an der Spitze des Abwasserfiltertanks (10) bereitgestellt ist;
mehrere leichter Filtersande (20) mit einem spezifischen Gewicht, das kleiner als das von Wasser ist, wobei die Filtersande in die Abwasserfilterkammer (11) gefüllt sind und in einem oberen Abschnitt der Abwasserfilterkammer (11) durch einen Auftrieb von Wasser gesammelt werden sollen;
einen Filtersand-Reinigungstank (30), wobei ein Ende des Filtersand-Reinigungstanks (30) mit einem oberen Ende an einer Spitze der Abwasserfilterkammer (11) des Abwasserfiltertanks (10) durch ein Sandeinlassrohr (31) in Verbindung steht, wobei das andere Ende des Filtersand-Reinigungstanks (30) mit der Abwasserfilterkammer (11) des Abwasserfiltertanks (10) durch ein Sandauslassrohr (32) in einer rückwärtigen Verbindung steht, um die leichten Filtersande (20) zyklisch zu reinigen;
eine Schlammentladungsvorrichtung (50), die auf einem Boden des Abwasserfiltertanks (10) angeordnet ist und mit der Abwasserfilterkammer (11) in Verbindung steht, wobei die Schlammentladungsvorrichtung dazu verwendet wird, um Schlamm (80), der sich auf dem Boden der Abwasserfilterkammer (11) abgesetzt hat, zu entladen, und
eine Umkehrwasch-Strahldüse (40), **dadurch gekennzeichnet, dass** sich die Umkehrwasch-Strahldüse (40) bis in die Abwasserfilterkammer (11) des Abwasserfiltertanks (10) erstreckt und oberhalb des Abflussrohrs (15) für sauberes Wasser angeordnet ist, wobei die Umkehrwasch-Strahldüse (40) zum Einlassen von sauberem Wasser verwendet wird, um die leichten Filtersande (20) zu waschen.

2. Umkehrbares Wasch-, Umkehrabwasserbehandlungssystem vom Typ eines Schwebebetts nach Anspruch 1, wobei der leichte Filtersand (20) ein Filterpartikel mit einem spezifischen Gewicht kleiner als Wasser ist.

3. Umkehrbares Wasch-, Umkehrabwasserbehandlungssystem vom Typ eines Schwebebetts nach Anspruch 1, wobei das Abwassereinlassrohr (14) mit einem ersten Ventil (16) versehen ist, das Abflussrohr (15) für sauberes Wasser mit einem zweiten Ventil (17) versehen ist, das Sandeinlassrohr (31) mit einem dritten Ventil (33) versehen ist, das Sandauslassrohr (32) mit einem vierten Ventil (34) versehen ist, und die Umkehrwasch-Strahldüse (40) mit einem fünften Ventil (41) versehen ist.

4. Umkehrbares Wasch-, Umkehrabwasserbehandlungssystem vom Typ eines Schwebebetts nach Anspruch 1, wobei eine Rohrwand des Abflussrohres (15) für sauberes Wasser mit mehreren Maschengittern (42, 151) oder Sieben versehen ist, um zu verhindern, dass die leichten Filtersande (20) in das Abflussrohr (15) für sauberes Wasser eintreten, und um damit nur sauberem Wasser zu ermöglichen, in das Abflussrohr (15) für sauberes Wasser zu fließen.

5. Umkehrbares Wasch-, Umkehrabwasserbehandlungssystem vom Typ eines Schwebebetts nach Anspruch 1, wobei die Umkehrwasch-Strahldüse (40) mit mehreren Maschengittern (42, 151) oder Sieben versehen ist, um zu verhindern, dass die leichten Filtersande (20) in die Abwasserfilterkammer (11) eintreten, und um damit nur sauberem Wasser zu ermöglichen, in die Abwasserfilterkammer (11) zu fließen.

6. Umkehrbares Wasch-, Umkehrabwasserbehandlungssystem vom Typ eines Schwebebetts nach Anspruch 1, wobei die Schlammentladungsvorrichtung (50) ein Schlammfördermittel (51) und eine Schlammentladungspumpe (52) umfasst, wobei das Schlammfördermittel (51) auf dem Boden des Abwasserfiltertanks (10) angeordnet ist, und wobei die Schlammentladungspumpe (52) mit dem Boden der Abwasserfilterkammer (11) durch das Schlammfördermittel (51) in Verbindung steht.

7. Umkehrbares Wasch-, Umkehrabwasserbehandlungssystem vom Typ eines Schwebebetts nach Anspruch 1, wobei eine Seite des Abwasserfiltertanks (10) mit einem Wasserstandsanzeiger (60) versehen ist.

8. Umkehrbares Wasch-, Umkehrabwasserbehandlungssystem vom Typ eines Schwebebetts nach Anspruch 7, wobei der Wasserstandsanzeiger (60) ein Wasserstands-Sichtfenster (61), das an einer Seitenwand des Abwasserfiltertanks (10) geöffnet ist, oder ein lichtdurchläsiges Wasserstandsanzeigerohr ist, das auf einer Seite des Abwasserfiltertanks (10) installiert ist, und wobei das lichtdurchläsige Wasserstandsanzeigerohr mit der Abwasserfilterkammer (11) in Verbindung steht.

9. Behandlungsverfahren des umkehrbaren Wasch-, Umkehrabwasserbehandlungssystems vom Typ eines Schwebebetts nach Anspruch 1, wobei das Behandlungsverfahren ein Abwasserfiltrationsverfahren umfasst, das **dadurch gekennzeichnet ist, dass** das Abwasserfiltrationsverfahren die folgenden Schritte umfasst:
(a) Öffnen des Abflussrohrs (15) für sauberes Wasser des Abwasserfiltertanks (10), und Schließen des Sandeinlassrohrs (31), des Sandauslassrohrs (32) des Filtersand-Reinigungstanks (30), der Umkehrwasch-Strahldüse (40) und der Schlammentladungsvorrichtung (50);
(b) Öffnen des Abwassereinlassrohres (14) des Abwasserfiltertanks (10), um dem Abwasser von außen zu ermöglichen, in die Abwasserfilterkammer (11) einzutreten;
(c) Konfigurieren des Abwassers derart, dass es nach oben zu dem Abflussrohr (15) für sauberes Wasser fließt;
(d) Konfigurieren der leichten Filtersande (20), damit diese oberhalb der Abwasserfilterkammer (11) durch einen Auftrieb des Abwassers gesammelt werden, und um Verunreinigungen und schädliche Substanzen in dem Abwasser zu filtern, indem das Abwasser nach oben fließt, um das Abwasser in ein gereinigtes Wasser zu filtern, und wobei dann das gereinigte Wasser entladen wird; und
(e) Konfigurieren fester Verunreinigungen (70), die durch die leichten Filtersande (20) adsorbiert werden, um sich auf dem Boden der Abwasserfilterkammer (11) abzusetzen, so dass Schlamm (80) gebildet und abgelagert wird und dann durch die Schlammentladungsvorrichtung (50) entladen wird.

10. Behandlungsverfahren des umkehrbaren Wasch-, Umkehrabwasserbehandlungssystems vom Typ eines Schwebebetts nach Anspruch 9, wobei das Behandlungsverfahren ein umkehrbares Filtersand-Waschverfahren umfasst, und wobei das umkehrbare Filtersand-Waschverfahren die folgenden Schritte umfasst:
(f) Schließen des Abwassereinlassrohrs (14) und des Abflussrohrs (15) für sauberes Wasser des Abwasserfiltertanks (10), des Abflussrohrs (15) für sauberes Wasser und des Sandauslassrohrs (32), und Öffnen des Sandeinlassrohrs (31) des Filtersand-Reinigungstanks (30);
(g) Öffnen der Umkehrwasch-Strahldüse (40), um einem sauberen Wasser, das von außen kommt, zu ermöglichen, in die Abwasserfilterkammer (11) einzutreten;
(h) Konfigurieren des sauberen Wassers, um die leichten Filtersande (20) auszuspülen, so dass die leichten Filtersande (20) nach oben schwimmen und durch das Sandeinlassrohr (31) in den Filtersand-Reinigungstank (30) eintreten;
(i) in einem Zustand, in dem das Sandauslassrohr (32) geschlossen ist, Reinigen der leichten Filtersande (20) in dem Filtersand-Reinigungstank (30) und dann Lagern der leichten Filtersande (20) in dem Filtersand-Reinigungstank (30); und
(j) Schließen des Abwassereinlassrohrs (14), des Abflussrohrs (15) für sauberes Wasser, des Sandeinlassrohrs (31) und der Umkehrwasch-Strahldüse (40), und Öffnen des Sandauslassrohrs (32), und Aktivieren der Schlammentladungsvorrichtung (50), um den Schlamm (80) zu entladen, der auf dem Boden der Abwasserfilterkammer (11) abgelagert ist, und Bilden eines Unterdruckzustands in der Abwasserfilterkammer (11), so dass die leichten Filtersande (20) in dem Filtersand-Reinigungstank (30) durch das Sandauslassrohr (32) zu der Abwasserfilterkammer (11) zurückfließen.

## Revendications

1. Système de traitement inverse des eaux usées à lavage réversible et à lit flottant utilisé pour filtrer les eaux usées et les transformer en eau propre, comprenant :
un réservoir de filtrage des eaux usées (10), étant un récipient fermé avec une chambre de filtrage des eaux usées (11) à l'intérieur, dans lequel un tuyau d'entrée des eaux usées (14) communiqué à la chambre de filtrage des eaux usées est situé au niveau d'une partie inférieure du récipient fermé, et un tuyau de drainage de l'eau propre (15) communiqué à la chambre de traitement des eaux usées est situé au niveau d'un fond du réservoir de filtrage des eaux usées (10) ; et (10) ;
une pluralité de sables de filtrage légers (20) ayant un poids spécifique inférieur à celui de l'eau, remplis dans la chambre de filtrage des eaux usées (11) et devant être rassemblés dans une partie supérieure de la chambre de filtrage des eaux usées (11) sous l'effet d'une flottabilité de l'eau ;
un réservoir de nettoyage du sable de filtrage (30), dans lequel une extrémité du réservoir de nettoyage du sable de filtrage (30) est communiquée à une extrémité supérieure de la chambre de filtrage des eaux usées (11) du réservoir de filtrage des eaux usées (10) par l'intermédiaire d'un tuyau d'entrée de sable (31), l'autre extrémité du réservoir de nettoyage du sable de filtrage (30) est communiquée à nouveau à la chambre de filtrage des eaux usées (11) du réservoir de filtrage des eaux usées (10) par l'intermédiaire d'un tuyau de sortie de sable (32) pour le nettoyage cyclique des sables de filtrage légers (20) ;
un dispositif d'évacuation des boues (50), placé au niveau d'un fond du réservoir de filtrage des eaux usées (10) et communiqué à la chambre de filtrage des eaux usées (11), utilisé pour évacuer les boues déposées (80) au niveau du fond de la chambre de filtrage des eaux usées (11) et une buse à jet de lavage inversé (40), **caractérisé en ce que**, ladite buse de lavage inversé (40) s'étendant dans la chambre de filtrage des eaux usées (11) du réservoir de filtrage des eaux usées (10) et située au-dessus du tuyau de drainage de l'eau propre (15), utilisée pour introduire de l'eau propre afin de laver les sables de filtrage légers (20).

2. Système de traitement inverse des eaux usées à lavage réversible et à lit flottant selon la revendication 1, dans lequel le sable de filtrage léger (20) est une particule filtrante dont le poids spécifique est inférieur à celui de l'eau.

3. Système de traitement inverse des eaux usées à lavage réversible et à lit flottant selon la revendication 1, dans lequel le tuyau d'entrée des eaux usées (14) est muni d'une première vanne (16), le tuyau de drainage de l'eau propre (15) est muni d'une deuxième vanne (17), le tuyau d'entrée du sable (31) est muni d'une troisième vanne (33), le tuyau de sortie du sable (32) est muni d'une quatrième vanne (34), et la buse de lavage à jet inversé (40) est munie d'une cinquième vanne (41).

4. Système de traitement inverse des eaux usées à lavage réversible et à lit flottant selon la revendication 1, dans lequel une paroi du tuyau de drainage de l'eau propre (15) est pourvue d'une pluralité de mailles (42, 151) ou d'écrans pour empêcher les sables de filtrage légers (20) de pénétrer dans le tuyau de drainage de l'eau propre (15) et permettre ainsi uniquement à l'eau propre de s'écouler dans le tuyau de drainage de l'eau propre (15).

5. Système de traitement inverse des eaux usées à lavage réversible et à lit flottant selon la revendication 1, dans lequel la buse de lavage inverse (40) est pourvue d'une pluralité de mailles (42, 151) ou d'écrans pour empêcher les sables de filtrage légers (20) de pénétrer dans la chambre de filtrage des eaux usées (11) et permettre ainsi uniquement à l'eau propre de s'écouler dans la chambre de filtrage des eaux usées (11).

6. Système de traitement inverse des eaux usées à lavage réversible et à lit flottant selon la revendication 1, dans lequel le dispositif d'évacuation des boues (50) comprend un convoyeur de boues (51) et un tuyau d'évacuation des boues (52), le convoyeur de boues (51) est disposé au niveau du fond du réservoir de filtrage des eaux usées (10), et le tuyau d'évacuation des boues (52) est relié au fond de la chambre de filtrage des eaux usées (11) par l'intermédiaire du convoyeur de boues (51).

7. Système de traitement inverse des eaux usées à lavage réversible et à lit flottant selon la revendication 1, dans lequel un côté du réservoir de filtrage des eaux usées (10) est pourvu d'un indicateur de niveau d'eau (60).

8. Système de traitement inverse des eaux usées à lavage réversible et à lit flottant selon la revendication 7, dans lequel l'indicateur de niveau d'eau (60) est une fenêtre d'observation du niveau d'eau (61) ouverte sur une paroi latérale du réservoir de filtrage des eaux usées (10) ou un tuyau transparent de niveau d'eau installé sur un côté du réservoir de filtrage des eaux usées (10), et le tuyau transparent de niveau d'eau est communiqué à la chambre de filtrage des eaux usées (11).

9. Procédé de traitement du système de traitement inverse des eaux usées à lavage réversible et à lit flottant selon la revendication 1, le procédé de traitement comprenant une procédure de filtrage des eaux usées, **caractérisé en ce que** la procédure de filtrage des eaux usées comprend les étapes suivantes consistant à :
(a) ouvrir le tuyau de drainage de l'eau propre (15) du réservoir de filtrage des eaux usées (10), et fermer le tuyau d'entrée du sable (31), le tuyau de sortie du sable (32) du réservoir de nettoyage du sable du filtre (30), la buse à jet de lavage inversé (40) et le dispositif d'évacuation des boues (50) ;
(b) ouvrir le tuyau d'entrée des eaux usées (14) du réservoir de filtrage des eaux usées (10) pour permettre aux eaux usées externes d'entrer dans la chambre de filtrage des eaux usées (11) ;
(c) configurer les eaux usées pour qu'elles s'écoulent vers le haut dans le tuyau d'évacuation de l'eau propre (15) ;
(d) configurer les sables de filtrage légers (20) pour qu'ils soient rassemblés au-dessus de la chambre de filtrage des eaux usées (11) par la flottabilité des eaux usées et pour filtrer les impuretés et les substances nocives dans les eaux usées qui s'écoulent vers le haut pour filtrer les eaux usées en une eau purifiée, et ensuite évacuer l'eau purifiée ;
et
(e) configurer les impuretés solides (70) adsorbées par les sables de filtrage légers (20) pour qu'elles se déposent au fond de la chambre de filtrage des eaux usées (11), de sorte que des boues (80) se forment et se déposent, puis sont évacuées par le dispositif d'évacuation des boues (50).

10. Procédé de traitement du système de traitement inverse des eaux usées à lavage réversible et à lit flottant selon la revendication 9, dans lequel le procédé de traitement comprend une procédure de lavage inverse du sable filtrant, et la procédure de lavage inverse du sable de filtrage comprend les étapes consistant à :
(f) fermer le tuyau d'entrée des eaux usées (14) et le tuyau de drainage de l'eau propre (15) du réservoir de filtrage des eaux usées (10), le tuyau de drainage de l'eau propre (15) et le tuyau de sortie du sable (32), et ouvrir le tuyau d'entrée du sable (31) du réservoir de nettoyage des sables de filtrage (30) ;
(g) ouvrir la buse à jet de lavage inversé (40) pour permettre à une eau propre externe d'entrer dans la chambre de filtrage des eaux usées (11) ;
(h) configurer l'eau propre pour rincer les sables de filtrage légers (20), de sorte que les sables de filtrage légers (20) flottent vers le haut et entrent dans le réservoir de nettoyage des sables de filtrage (30) par le tuyau d'entrée de sable (31) ;
(i) dans un état dans lequel le tuyau de sortie de sable (32) est fermé, nettoyer les sables de filtrage légers (20) dans le réservoir de nettoyage des sables de filtrage (30) et ensuite stocker les sables de filtrage légers (20) dans le réservoir de nettoyage des sables de filtrage (30) ; et
(j) fermer le tuyau d'entrée des eaux usées (14), le tuyau de drainage de l'eau propre (15), le tuyau d'entrée du sable (31) et la buse de lavage inversé (40), et ouvrir le tuyau de sortie du sable (32), et activer le dispositif d'évacuation des boues (50) pour évacuer les boues (80) déposées au fond de la chambre de filtrage des eaux usées (11), et former un état de pression négative sous vide dans la chambre de filtrage des eaux usées (11), de sorte que les sables de filtrage légers (20) dans le réservoir de nettoyage des sables de filtrage (30) retournent dans la chambre de filtrage des eaux usées (11) à travers le tuyau de sortie des sables (32).
